# EUROPEAN PATENT SPECIFICATION

(11) **EP 3 439 188 B1**
(45) Date of publication and mention of the grant of the patent: **11.12.2019**
(21) Application number: 17184649.6
(22) Date of filing: 03.08.2017
(51) Int. Cl.: H04B 1/74, H04L 1/22, H04W 24/04

(54) **METHOD AND SYSTEM FOR REDUNDANT COMMUNICATION BETWEEN A USER TERMINAL AND A CENTRAL STATION**
VERFAHREN UND SYSTEM ZUR REDUNDANTEN KOMMUNIKATION ZWISCHEN EINEM BENUTZERENDGERÄT UND EINER ZENTRALEN STATION
PROCÉDÉ ET SYSTÈME DE COMMUNICATION REDONDANTE ENTRE UN TERMINAL UTILISATEUR ET UNE STATION CENTRALE

(43) Date of publication of application: 06.02.2019
(73) Proprietor: Kapsch CarrierCom France S.A.S., 78066 St Quentin Yvelines Cedex (FR)
(72) Inventor: GRUET, Christophe, 78180 Montigny le Bretonneux (FR); JACQUES, Roger, 78320 Lévis Saint Nom (FR); TANE, Pierre, 91200 Boulogne-Billancourt (FR); BOTET, Gil, 78180 Montigny le Bretonneux (FR)
(74) Representative: Weiser & Voith Patentanwälte Partnerschaft

(56) References cited:
- EP-A1- 3 142 452
- US-A1- 2006 218 298
- US-A1- 2014 119 349

## Description

The invention relates to a method for redundant communication between a user terminal and a central station, the method using a first and a second communication system, each comprising a transceiver of the user terminal communicating with a node connected to the central station, the two transceivers being separate from each other and the two nodes being separate from each other, wherein both communication systems are operated according to an LTE standard such that each communication system communicates downlink data over a sequence of downlink radio frames and uplink data over a sequence of uplink radio frames, the downlink as well as the uplink radio frames each comprising a predetermined number of subframes. The invention further relates to a system for redundant communication between a user terminal and a central station.

Prior art US2006/0218298 provides a disclosure of mobile nodes supporting simultaneous OFDM links with multiple points of network attachment.

LTE is, inter alia, employed in railway based communications, where traffic data, e.g., messages pertaining to the correct operation of a train and signalling messages regarding the status of the train, track, and environment, are wirelessly communicated to and from trains, which is also known as communications-based train control (CBTC). Since such messages are critical to the functioning of the railway system and thus serve to prevent accidents such as collisions, the communication system is operated in a redundant manner, meaning that hardware exists twice on the train as well as in the network infrastructure, and all communications between a user terminal of the train and a central station are performed twice. For example, the user terminal in the train can be equipped with two transceivers, each communicating with a different node of a wireless network, and each node in turn communicates with the central station.

For these two independent wireless communications between transceivers and nodes, in the state of the art different frequency bands are assigned for each communication system. If one of the two communication systems breaks down, the train can still rely on the other communication system to communicate safety critical data. However, in the situation of a breakdown of one of the two communication systems, there is no more room for error since the safety critical messages are only communicated once.

It is thus an object of the invention to provide an improved method and system for redundant communication of the type mentioned in the introduction, which method provides a better functionality in case of a breakdown of one of the communication systems.

In a first aspect of the invention, this aim is achieved by a method for redundant communication, in which the communication systems are synchronised on a subframe level, both use identical frequency ranges for the downlink radio frames, respectively, and both use identical frequency ranges for the uplink radio frames, respectively,
wherein the first subframe of the first half of one of the downlink radio frames of the first communication system coincides with the first subframe of the second half of one of the downlink radio frames of the second communication system,
wherein, for both downlink radio frames and uplink radio frames respectively, the first communication system uses a first set of subframes for communication of traffic data and the second communication system uses a second set of subframes for communication of traffic data, wherein the first and second set of subframes do not overlap during communication, and
wherein, in the case of a failure of one of the communication systems, the respective other communication system uses the set of subframes previously unused by said other communication system for communication of traffic data, too.

Instead of using different frequency ranges, on which previously the two communication systems communicated completely independently from each other, in the invention both communication systems use the same frequency band, having for example double the bandwidth compared to the individual frequency bands of the state of the art. Even though they have in principle double the bandwidth available for communication, they have to share approximately half of the bandwidth with the respective other communication system.

In LTE, e.g., a physical broadcast channel, PBCH, is broadcast by each node over the first subframe of each downlink radio frame. The physical broadcast channels of both communication systems should never collide. This means that one cannot simply superpose the two communication systems over a single frequency range without taking additional measures. Moreover, in LTE primary synchronisation signals, PSS, and secondary synchronisation signals, SSS, are broadcast on the first subframe of the first half of each downlink radio frame as well as on the first subframe of the second half of each downlink radio frame. The inventors found that while a collision of the synchronisation signals might lead to a poor signal to noise ratio, the synchronisation signals can still be identified by the user terminal.

An overlapping LTE system can thus be achieved according to the invention by synchronising two communication systems on a subframe level and starting downlink radio frames of one of the two communication systems when a downlink radio frame of the other communication system has progressed halfway through in time. By means of this, two communication systems can communicate over a single frequency band without interfering each other due to the appropriate choice of delaying one of the downlink radio frames and thus the emission of the first physical broadcast channel, PBCH, by half a radio frame.

During normal operation, the communication systems both communicate the same data over the same frequency band and thus approximately the same throughput can be achieved as in the state of the art. In fact, with the setup of the invention, slightly more throughput can be achieved because of the overlapping primary and secondary synchronisation signals. Furthermore, in the case of failure of one of the communication systems, the remaining working communication system has double the throughput immediately available for communication due to channel resources that have been freed up. In other words, because the respective other communication system is not using its assigned set of subframes anymore, the unused subframes can directly be re-used without adjusting the bandwidth and other communication parameters of the remaining communication system.

Preferably, in case of a failure of one of the communication systems, the transceiver of said failing communication system joins the operative communication system and communicates traffic data with the node of the operative communication system. Thus, the transceiver of the failing communication system decides or selects to participate in the other communication system once it detects that a communication over its initial communication system is no longer possible, and the node of the operative communication system then serves two transceivers. Therefore, traffic data is communicated between the transceiver of the operative communication system and the node of the operative communication system as well as between the transceiver of the failing communication system and the node of the operative communication system. This yields the advantage that redundancy can be achieved again even in case of a failure of one of the nodes or interference of the communications of one of the communication systems.

Alternatively, one of the communication systems transmits, in case of a failure of the respective other communication system, the traffic data twice, once over its initially assigned set of subframes and once over the set of subframes previously used by said other communication system. Thereby, redundancy over the wireless transmission of the data can still be achieved, even if the hardware of the other communication system is malfunctioning. Alternatively, different data could be transferred via the newly available set of subframes, for example data pertaining to the malfunctioning or breakdown of the respective other communication system.

Sending the primary and secondary synchronisation signals PSS/SSS in an overlapping manner leads to a signal to noise ratio of around 0 dB for user terminals trying to detect these LTE systems through the synchronisation signals. Encoded in the synchronisation signals is the physical cell identifier, PCI, from which the location of cell-specific reference signals, RS, can be determined. It is preferred that the reference signals of the two communication systems do not overlap. To achieve this, the respective physical cell identifiers are chosen to obtain a non-overlapping mapping of the reference signals. Incidentally, this also leads to non-overlapping physical control format indicator channels, PCFICH, as well as for the physical hybrid ARQ indicator channel, PHICH. Thus, preferably, both communication systems have their own physical cell identifier, which is encoded in synchronisation signals transmitted over the first subframe of the first half and over the first subframe of the second half of each downlink radio frame, and wherein the relationship between the physical cell identifiers is (PCI₁ - PCI₂) mod 6 ≠ 0, wherein PCI₁ and PCI₂ are the physical cell identifiers of the first and of the second communication system, respectively, and mod is the modulo operation.

Preferably, standard LTE systems are employed and the timings of the downlink and uplink radio frames are aligned with each other, i.e., also the first subframe of the first half of one of the uplink radio frames of the first communication system coincides with the first subframe of the second half of one of the uplink radio frames of the second communication system, wherein the uplink and downlink radio frames comprise ten subframes such that the first subframe of the first communication system coincides with the sixth subframe of the second communication system.

In a preferred embodiment, both communication systems use their respective second, third, and fourth uplink and downlink subframes to communicate traffic data when both communication systems are in operation, whereas one communication system uses the second, third, fourth, seventh, eight, and ninth uplink and downlink subframes to communicate traffic data in case of a failure of the respective other communication system. Alternatively, the two communication systems could use alternating subframes, e.g., the second, fourth, and eight subframe or any other distribution of subframes. Moreover, the communication systems could, for example, use an uneven distribution of subframes, e.g., the first communication system could use two subframes for communication of traffic data and the other communication system could use four subframes for communication of traffic data. In this setup, redundancy could only be achieved on two of the subframes. For communication of traffic data, it is also possible to use additional channel resources of subframes that are partially used for control channels such as the first, fourth, fifth, and tenth communication channel.

For achieving a good signal to noise ratio, further LTE control channels of the two communication systems should not overlap. Hence, both communication systems preferably schedule, for the downlink radio frames, system information blocks onto the sixth subframe. It is to be understood, however, that system information blocks do not have to be broadcast over each radio frame.

Depending on the bandwidth used for the two communication systems, paging information is broadcast differently. In one embodiment, both communication systems schedule, for the downlink radio frames, paging information onto the sixth subframe when a bandwidth of 1.4 or 3.0 MHz is used. In another embodiment, both communication systems schedule, for the downlink radio frames, paging information onto the first, fifth, sixth, and tenth subframe or only onto the tenth subframe, while also appropriately choosing downlink paging parameters, when a bandwidth of 5.0, 10.0, 15.0, or 20 MHz is used.

For the uplink radio frames, the rules set out for the non-overlapping transmission of traffic data already leads to non-overlapping physical uplink synchronisation channels, PUSCH. Additionally, according to most LTE standards, the physical random access channel, PRACH, is located on the first, fifth, sixth, and tenth subframe of the uplink radio frames. However, to ensure that the PRACHs of the two communication channels are non-overlapping while only deviating from the standard setup in the least amount possible, preferably PRACH is located only on the fifth and sixth subframes.

According to a second aspect, the present invention creates a system for redundant communication between a user terminal and a central station, comprising
a first communication system having a first transceiver of the user terminal and a first node,
a second communication system having a second transceiver of the user terminal and a second node, the first and second transceiver being separate from each other and the first and second node being separate from each other,
wherein both communication systems are configured to operate according to an LTE standard such that each communication system communicates uplink data over a sequence of uplink radio frames and downlink data over a sequence of downlink radio frames, the uplink as well as the downlink radio frames each comprising a predetermined number of subframes,
wherein the communication systems are configured to be synchronised on a subframe level, in that both are configured to use identical frequency ranges for the uplink radio frames, respectively, and in that both are configured to use identical frequency ranges for the downlink radio frames, respectively,
wherein both communication systems are configured to have the first subframe of the first half of one of the downlink radio frames of the first communication system coincide with the first subframe of the second half of one of the downlink radio frames of the second communication system,
wherein, for both uplink radio frames and downlink radio frames respectively, the first communication system is configured to use a first set of subframes for communication of traffic data and the second communication system is configured to use a second set of subframes for communication of traffic data, wherein the first and second set of subframes do not overlap during communication, and
wherein the first and the second communication systems are configured to, in the case of a failure of the respective other communication system, use the set of subframes previously used by said other communication system for communication of traffic data, too.

Relating to the advantages and further particular embodiments of the system, it is referred to the above statements on the method of the invention.

The invention shall now be explained in more detail below on the basis of preferred exemplary embodiments thereof with reference to the accompanying drawings, in which:

Fig. 1 shows components of a system for redundant railway communication in a schematic overview;

Figs. 2a and 2b show two downlink radio frames (Fig. 2a) and two uplink radio frames (Fig. 2b) of a redundant communication system according to the state of the art in a frequency-time diagram; and

Fig. 3 shows two radio frames of a redundant communication system according to the invention in a frequency-time diagram.

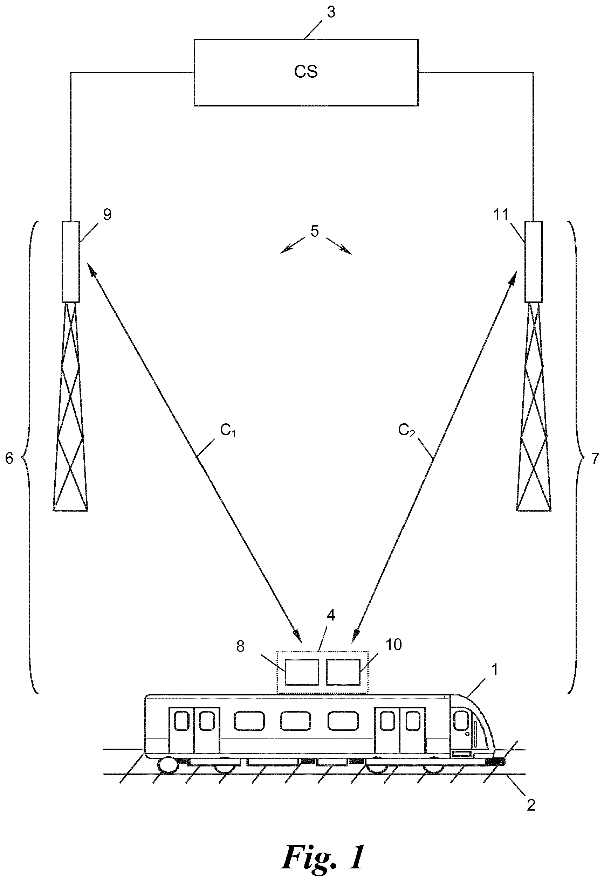

Fig. 1 shows a train 1 moving along a track 2. The train 1 receives traffic data, e.g., messages pertaining to the correct operation of the train 1, from a central station 3 and likewise communicates traffic data, e.g., signalling messages regarding the status of the train 1, track 2, and environment, to the central station 3 by means of a user terminal 4 carried by the train 1. Such a setup is usually referred to as a communications-based train control (CBTC), i.e., a railway signalling system that makes use of the telecommunications between the train and track equipment for traffic management and infrastructure control.

To achieve a secure communication between the user terminal 4 and the central station 3, a system 5 for redundant communication is set up, which means that parallely a first and a second communication system 6, 7 are employed. The first communication system 6 has a first transceiver 8 of the user terminal 4 and a first node 9, which is part of a cellular network and connected to the central station 3. A first wireless communication C₁ can be established between first transceiver 8 and first node 9. The second communication system 7 has a second transceiver 10 of the user terminal 4 and a second node 11, which can be a node of the same cellular network hosting the first node 9 or part of a different cellular network and is connected to the central station 3. Also for the second communication system 7, a second wireless communication C₂ can be established between second transceiver 10 and second node 11.

The first and the second transceiver 8, 10 are separate from each other but they are part of the same user terminal 4. Similarly, the first and the second node 9, 11 are separate from each other but can be installed in or on the same pylon and/or share other hardware features, such as antennas.

The system 5 can optionally have additional redundant components such as secure gateways of the user terminal 4 and/or node 9, 11, a redundant onboard IP network of the user terminal 4 and a redundant IP based track side network of the nodes 9, 11 or central station 3. However, these measures are known to the skilled person and not discussed in further detail herein.

The central station 3 as well as the user terminal 4 each comprise one or more applications that generate the data to be transmitted, so-called traffic data, to applications in the respective other entity. The user terminal 4 could, for example, have a single application that forwards traffic data once via the first transceiver 8 and once via the second transceiver 10. Alternatively, there could be two independently functioning applications that determine traffic data in a redundant manner, and one of these applications could forward traffic data to the first transceiver 8 and the other application forwards traffic data to the second transceiver 10. The same usage of one application forwarding traffic data to both the first and second nodes 9, 11 or two applications that each forward traffic data to only the first or only the second node 9, 11 could also be employed within the central station 3.

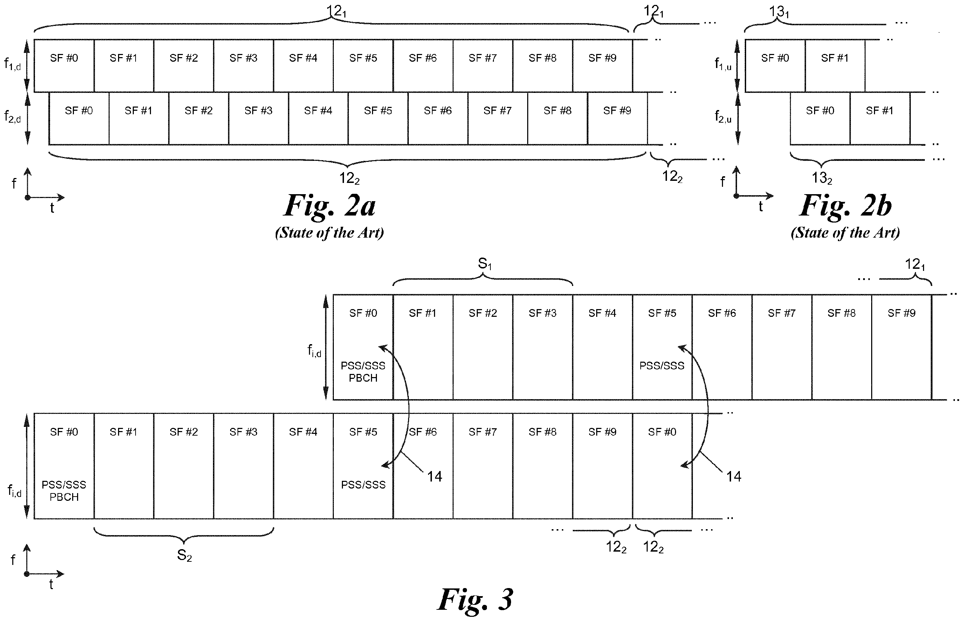

As both communication systems 6, 7 are operated according to an LTE standard, each communication system communicates downlink data over a sequence of downlink radio frames 12₁, 12₂ (Figs. 2a and 3) and uplink data over a sequence uplink radio frames 13₁, 13₂ (Figs. 2b and 3). The uplink as well as the downlink radio frames 12₁, 12₂, 13₁, 13₂ each comprise a predetermined number of subframes SF#n, wherein n = 0, ..., N. In the following, only radio frames with ten (N = 9) subframes SF#0, ..., SF#9 will be described but in practice any number of subframes can be chosen.

According to most LTE standards, a radio frame has a length of 10 ms such that a new radio frame 12₁, 12₂, 13₁, 13₂ starts every 10 ms. It follows that for radio frames 12₁, 12₂, 13₁, 13₂ having ten subframes, each subframe has a length of 1 ms. Herein, only Frequency Division Duplexing (FDD) LTE is considered, meaning that the downlink and the uplink radio frames respectively occupy different frequency ranges, as will be discussed below.

The examples of Figs. 2a and 2b illustrating the configurations of radio frames in frequency f and time t according to the state of the art shall now be discussed in conjunction with the system overview of Fig. 1.

Fig. 2a shows one downlink radio frame 12₁ of the first communication system 6 and one downlink radio frame 12₂ of the second communication system 7. The first downlink radio frame 12₁ occupies a certain frequency range f_{1,d} and the second downlink radio frame 12₂ occupies a different frequency range f_{2,d}. The frequency ranges f_{1,d}, f_{2,d} are shown to be directly adjacent but generally they can have a certain separating gap in between them. The two downlink radio frames 12₁, 12₂ are not synchronised such that their subframes SF#n are not aligned. It can be seen that the two downlink radio frames 12₁, 12₂ are operated completely independently from each other and do not interact.

Fig. 2b shows one uplink radio frame 13₁ of the first communication system 6 and one uplink radio frame 13₂ of the second communication system 7. The first uplink radio frame 13₁ occupies a certain frequency range f_{1,u} and the second uplink radio frame 13₂ occupies a different frequency range f_{2,u}. Like the downlink communication, the frequency ranges f_{1,u}, f_{2,u} may be directly adjacent or can have a certain separating gap in between them and the two uplink radio frames 13₁, 13₂ are not synchronised such that their subframes SF#n are not aligned. Here, also the two uplink radio frames 13₁, 13₂ are operated completely independently from each other and do not interact.

Fig. 3 illustrates, in frequency f and time t, a different embodiment of the system of Fig. 1 according to the present invention, in which two downlink radio frames 12₁, 12₂ occupy and identical frequency range f_{i,d}. For simplicity, the two downlink radio frames 12₁, 12₂ are shown next to each other, but arrows 14 indicate that they are in fact superposed over an identical frequency range f_{i,d}, for example, both ranging from 791 MHz to 821 MHz. Similarly thereto, the uplink radio frames 13₁, 13₂ (not shown) of this embodiment are superposed over an identical frequency range f_{i,u}, for example on a frequency range of 832 MHz to 862 MHz.

Furthermore, the downlink and uplink radio frames 12₁, 12₂, 13₁, 13₂ of both communication systems 6, 7 in this embodiment are each synchronised on a subframe level such that the start of a subframe of the first communication system 6 coincides with the start of a subframe of the second communication system 7. Generally, the synchronisation for the downlink radio frames 12₁, 12₂ can be independent from the uplink radio frames 13₁, 13₂, i.e., the timing for the downlink radio frames 12₁, 12₂ is independent from the timing of the uplink radio frames 13₁, 13₂. However, there could also be a synchronisation between the downlink and the uplink radio frames 12₁, 12₂, 13₁, 13₂.

To achieve synchronisation between the nodes 9, 11, they can be synchronised absolutely or relatively. For absolute synchronisation, nodes 9, 11 can both be equipped with an absolute clock, e.g., provided by GPS or IEEE 1588 standards. For a relative synchronisation, there has to be provided a direct or indirect connection between the nodes 9, 11, in which case one of the nodes 9, 11 can act as a master clock and the other node 9, 11 as a slave clock. Alternatively, a third party such as the central station 3 can act as a master clock and can be connected to the nodes 9, 11, which then act as slave clocks.

Generally, when a transceiver 8, 10 wants to initially synchronise to an LTE system, it tries to detect primary synchronisation signals, PSS, without a priori knowledge of the channel. The PSS (as well as the secondary synchronisation signals, SSS, see below) are broadcast by the respective node 9, 11 twice per downlink radio frame 12₁, 12₂, once on the first subframe SF#0 of the first half of the downlink radio frame 12₁, 12₂ and once on the first subframe SF#5 (in general SF#(N+1)/2) of the second half of each downlink radio frame 12₁, 12₂. Since the PSS are based on predetermined Zadoff-Chu sequences, there are only three possible sequences to detect for a transceiver 8, 10. Once the PSS have been detected, the transceiver 8, 10 can determine the secondary synchronisation signals, SSS, to therefrom calculate the radio frame timing and the identity of the cell, i.e., the physical cell identifier PCI₁, PCI₂ encoded in the synchronisation signals PSS, SSS. The procedure to determine the PSS and SSS is very robust such that transceivers 8, 10 can synchronise with the downlink radio frame 12₁, 12₂ even with a very low signal to noise ratio.

With the setup of Fig. 3, an overlapping frame structure has been achieved in which only the PSS and SSS are broadcast simultaneously by the two nodes 9, 11. As has been explained above, this does not pose a problem for transceivers 8, 10 trying to detect the radio frame structure of the respective communication system 6, 7. However, as has been briefly mentioned above, the PSS and SSS also give rise to the physical cell identifier PCI₁, PCI₂ of the respective communication system. Depending on the modulo of the physical cell identifier PCI₁, PCI₂, reference signals, RS, are distributed over the downlink radio frame 12₁, 12₂. To achieve non-overlapping reference signals, the relationship between the physical cell identifiers is chosen as (PCI₁ - PCI₂) mod 6 ≠ 0.

After a transceiver 8, 10 has detected the PSS and SSS, it can receive further downlink data as broadcast by the node 9, 10. Firstly, the transceiver 8, 10 tries to retrieve system information from the physical broadcast channel, PBCH, which is broadcast on the first subframe SF#0 of each downlink radio frame 12₁, 12₂. Contrary to the PSS and SSS, the PBCHs of the two communication systems 6, 7 should not overlap. This is achieved in the setup of Fig. 3 in that the first subframe SF#0 of the first half of one of the downlink radio frames 12₁ of the first communication system 6 coincides with the first subframe SF#5 of the second half of one of the downlink radio frames 12₂ of the second communication system 7 where no PBCHs are present. It is evident that due to the sequences of downlink radio frames 12₁, 12₂ also the first subframe SF#0 of the first half of one of the downlink radio frames 12₂ of the second communication system 7 coincides with the first subframe SF#5 of the second half of one of the downlink radio frames 12₁ of the first communication system 6.

To communicate traffic data, the first communication system 6 uses a first set S₁ of three subframes SF#1, SF#2, SF#3 for communication of traffic data and the second communication system 7 uses a second set S₂ of three subframes SF#1, SF#2, SF#3 for communication of traffic data. The first and second sets S₁, S₂ of subframes SF#n do not overlap during communication due to the shift of first subframes SF#0 of the downlink radio frames 12₁, 12₂.

For uplink radio frames 13₁, 13₂, there is no immediate need to overlap two specific subframes of the two communication systems 6, 7 because there is no fixed PBCH in the uplink radio frame but each subframe SF#n has its physical uplink control channel, PUCCH, arranged at its own sides. However, in some embodiments the uplink radio frames 13₁, 13₂ are aligned with the respective downlink radio frames 12₁, 12₂ due to an internal synchronisation of each communication system 6, 7. E.g., in this case, the first subframe SF#0 of the first half of one of the uplink radio frames 13₁ of the first communication system 6 coincides with the first subframe SF#5 of the second half of one of the uplink radio frames 13₂ of the second communication system 7.

In any case, also for the uplink radio frames 13₁, 13₂ the first and second sets S₁, S₂ of subframes SF#n are chosen such that they do not overlap during communication. For example, for downlink the set S₁ may comprise subframes SF#1, SF#2, SF#3 and the set S₂ subframes SF#1, SF#2, SF#3; but for uplink the set S₁ can comprise subframes SF#6, SF#7, SF#8 and the set S₂ subframes SF#6, SF#7, SF#8. However, preferably the sets S₁, S₂ are chosen to be identical with the sets S₁, S₂ of the downlink radio frames 12₁, 12₂.

Furthermore, the communication systems 6, 7 can also communicate traffic data in other subframes outside of the first or second set S₁, S₂, for example in the channel resources of the subframe SF#0 not used for communication of control channels PBCH or synchronisation signals PSS/SSS. However, in some embodiments, the first communication system uses only the first set S₁ of subframes for communication of traffic data and the second communication system uses only the second set S₂ of subframes for communication of traffic data. This can be employed for downlink as well as for uplink radio frames 12₁, 12₂, 13₁, 13₂.

If, while one of the two communication systems 6, 7 is operative, the other communication system 6, 7 fails, for example due to a hardware failure of elements within the transceiver 8 or 10 or within the node 9 or 11, due to interference on certain communication resources of the frequency band used, or even due to application failures outside of the scope of the communication system 6, 7, the communication system 6, 7 that is still operative can use the set S₁, S₂ of the respective other system for communication of traffic data, too. For example, if both communication systems usually use their respective second, third, and fourth downlink and uplink subframes SF#1, SF#2, SF#3 to communicate traffic data, the remaining operative communication system 6, 7 uses the second, third, fourth, seventh, eight, and ninth downlink and uplink subframes SF#1, SF#2, SF#3, SF#6, SF#7, SF#8, to communicate traffic data in case of a failure of the respective other communication system 6, 7.

For example, if the second communication systems 7 fails, the transceiver 10 of said failing second communication system 7, if still operative, can join the operative first communication system 6 and then the node 9 of the operative communication system 6 communicates traffic data with the first transceiver 8 using the first set S₁ of subframes and with the second transceiver 10 using the second set S₂ of subframes. The second set S₂ of subframes here corresponds to the set of subframes previously unused by the first communication system 6, e.g., subframes SF#6, SF#7, SF#8. However, the sets S₁, S₂ of subframes do not have to be strictly divided as in the operative case but the operative node 9, when using the set of subframes previously unused by said operative communication system 6, can distribute the subframes or communication resources of subframes as is known in the state of the art when a single node is serving two transceivers, e.g., the first transceiver 8 uses some communication resources of the two sets S₁, S₂ of the subframes while the second transceiver 10 uses different communication resources of the two sets S₁, S₂. The same can be applied vice versa in the case of a failure of the first communication system 6.

In these cases, the failure of one of the communication systems is preferably detected by the transceiver 8, 10 of the failing communication system 6, 7 and it then selects to communicate with the respective other communication system, i.e., joins it.

Alternatively, in case of a failure of one of the communication systems 6, 7, the remaining operative communication system 6, 7 can transmit the traffic data twice such that redundancy can be retained. This can be done either by simply copying ("multiplying") the traffic data generated by the application of the operative communication system 6, 7 for double transmission via the operative communication system 6, 7. Alternatively and depending on the type of failure of the respective communication system 6, 7, instead of simply copying the traffic data to be transmitted, the same application that provided the traffic data of the malfunctioning other communication system 6, 7 can also forward the traffic data to the operative communication system 6, 7, e.g., in case of interferences of the wireless communication between transceiver 8, 10 and nodes 9, 11. Further alternatively, a standby application in the user terminal 4 or the central station 3 can provide traffic data to the operative communication system 6, 7 instead of the application that used to provide traffic data for the malfunctioning other communication system 6, 7.

The failure of one of the communications systems 6, 7 can be detected in various ways. For example, there could be a separate communication link between the two nodes 9, 11, and each node continuously reports its status to the respective other node 9, 11, e.g., either reports an ACTIVE or an INACTIVE status to the other node 9, 11. Once a node 9, 11 receives an INACTIVE status from the other node 9, 11, it can use the set S₁, S₂ of subframes for communication of traffic data that was previously used by the malfunctioning communication system 6, 7. Alternatively, the central station 3 could report a failure of one of the communication systems 6, 7 to the node 9, 11 of the respective other communication systems 6, 7. Further alternatively, the transceivers 8, 10 could autonomously detect whether communication with the respective node 9, 11 is possible or not.

Above, the properties of the PSS, SSS, and PBCH in the communication systems 6, 7 have been laid out. However, in LTE there exist more control channels from which the transceivers retrieve information or make use of in other ways as will be described below.

For example, system information blocks, SIB, which are used to retrieve common and shared channel configurations, amongst others, are optionally scheduled only onto the sixth subframe SF#5 of the respective downlink radio frames 12₁, 12₂ and thus do not overlap.

Furthermore, paging messages are used in LTE to wake up transceivers 6, 7 that are in an idle mode. To achieve an orthogonal, i.e., non-overlapping, setup to the paging messages, their location can be chosen to be different depending on the frequency range f_{i,d} of the communication system 6, 7. Thus, both communication systems 6, 7 optionally schedule, for the downlink radio frames 12₁, 12₂, paging information onto the sixth subframe SF#5 when a bandwidth of 1.4 or 3.0 MHz is used. Alternatively, when a bandwidth of 5.0, 10.0, 15.0 or 20 MHz is used, both communication systems could schedule, for the downlink radio frames 12₁, 12₂, paging information onto the first, fifth, sixth, and tenth subframe SF#0, SF#4, SF#5, SF#9. In the latter case, alternatively the paging information could only be scheduled onto the tenth subframe SF#9. In this latter case, however, also appropriate downlink paging parameters have to be chosen as known to the skilled person, e.g., from 3GPP TS 36.304, V8.2.0, chapters 7.1 and 7.2, published May 2008.

To achieve a synchronisation with the uplink radio frame structure 13₁, 13₂, the transceivers 8, 10 utilise the physical random access channel, PRACH. In the simplest configuration, the transceivers 8, 10 may utilise uplink subframes SF#0, SF#4, SF#5, and SF#9 for the PRACH. Alternatively, the usage of PRACH can be restricted such that PRACH is used orthogonally, i.e., in a non-overlapping manner. To this end, in the embodiment where the uplink radio frames 13₁, 13₂ are aligned with the downlink radio frames 12₁, 12₂, the transceivers 8, 10 schedule the PRACH only onto uplink subframes SF#4 and SF#5 for both communication systems 6, 7. Once the uplink synchronisation is achieved for a transceiver 8, 10, the nodes 9, 11 can schedule uplink transmission resources for uplink traffic data for the respective transceiver 8, 10.

The physical uplink shared channel, PUSCH, carries radio resource control, RRC, signalling messages, amongst others. With the non-overlapping choice of sets S₁, S₂ for the uplink traffic data, the PUSCHs of the two communication systems 6, 7 are automatically non-overlapping.

Due to the above-mentioned scheduling for the uplink traffic data, resources of the physical uplink control channel, PUCCH, used for HARQ (hybrid automatic repeat request) purposes are already non-overlapping. Furthermore, PUCCH resources used for reporting of the channel quality indicator, CQI, multiple input, multiple output, MIMO, and scheduling requests, SR, can be made non-overlapping by a configuration restriction of the range of PUCCH used by both systems, e.g., only on predetermined uplink subframes.

The invention is thus not restricted to the specific embodiments described in detail herein but encompasses all variants, combinations, and modifications thereof that fall within the framework of the appended claims.

## Claims

1. Method for redundant communication between a user terminal (4) and a central station (3), the method using a first and a second communication system (6, 7), each comprising a transceiver (8, 10) of the user terminal (4) communicating with a node (9, 11) connected to the central station (3), the two transceivers (8, 10) being separate from each other and the two nodes (9, 11) being separate from each other,
wherein both communication systems (6, 7) are operated according to an LTE standard such that each communication system (6, 7) communicates downlink data over a sequence of downlink radio frames (12₁, 12₂) and uplink data over a sequence of uplink radio frames (13₁, 13₂), the downlink as well as the uplink radio frames (12₁, 12₂, 13₁, 13₂) each comprising a predetermined number of subframes (SF#n),
**characterised in that** the communication systems (6, 7) are synchronised on a subframe level, both use identical frequency ranges (f_{i,d}) for the downlink radio frames, respectively, and both use identical frequency ranges (f_{i,u}) for the uplink radio frames, respectively,
wherein the first subframe (SF#0) of the first half of one of the downlink radio frames (12₁) of the first communication system (6) coincides with the first subframe (SF#5) of the second half of one of the downlink radio frames (12₂) of the second communication system (7),
wherein, for both downlink radio frames (12₁, 12₂) and uplink radio frames (13₁, 13₂) respectively, the first communication system (6) uses a first set (S₁) of subframes (SF#n) for communication of traffic data and the second communication system (7) uses a second set (S₂) of subframes (SF#n) for communication of traffic data, wherein the first and second set of subframes (S₁, S₂) do not overlap during communication, and
wherein, in the case of a failure of one of the communication systems (6, 7), the respective other communication system (6, 7) uses the set (S₁, S₂) of subframes (SF#n) previously unused by said other communication system (6, 7) for communication of traffic data, too.

2. Method according to claim 1, wherein, in case of a failure of one of the communication systems (6, 7), the transceiver (8, 10) of said failing communication system (6, 7) joins the operative communication system (6, 7) and communicates traffic data with the node (9, 11) of the respective other communication system (6, 7).

3. Method according to claim 1 or 2, wherein both communication systems have their own physical cell identifier, which is encoded in synchronisation signals transmitted over the first subframe (SF#0) of the first half and over the first subframe (SF#0) of the second half of each downlink radio frame (12₁, 12₂), and
wherein the relationship between the physical cell identifiers is (PCI₁ - PCI₂) mod 6 ≠ 0, wherein PCI₁ and PCI₂ are the physical cell identifiers of the first and of the second communication system, respectively, and mod is the modulo operation.

4. Method according to any one of the claims 1 to 3, wherein the first subframe (SF#0) of the first half of one of the uplink radio frames (13₁) of the first communication system (6) coincides with the first subframe (SF#5) of the second half of one of the uplink radio frames (13₂) of the second communication system (7), and
wherein the downlink and uplink radio frames (12₁, 12₂, 13₁, 13₂) each comprise ten subframes (SF#0, ..., SF#9) such that the first subframe (SF#0) of the first communication system (6) coincides with the sixth subframe (SF#5) of the second communication system (7).

5. Method according to claim 4, wherein both communication systems use their respective second, third, and fourth downlink and uplink subframes (SF#1, SF#2, SF#3) to communicate traffic data when both communication systems (6, 7) are in operation, whereas one communication system (6, 7) uses the second, third, fourth, seventh, eight, and ninth downlink and uplink subframes (SF#1, SF#2, SF#3, SF#6, SF#7, SF#8), to communicate traffic data in case of a failure of the respective other communication system (6, 7).

6. Method according to claim 4 or 5, wherein both communication systems (6, 7) schedule, for the downlink radio frames (12₁, 12₂), system information blocks, SIB, onto the sixth subframe (SF#5) of the downlink radio frames (12₁, 12₂) .

7. Method according to any one of the claims 4 to 6, wherein both communication systems (6, 7) schedule, for the downlink radio frames (12₁, 12₂), paging information onto the sixth subframe (SF#5) when a bandwidth of 1.4 or 3.0 MHz is used.

8. Method according to any one of the claims 4 to 6, wherein both communication systems (6, 7) schedule, for the downlink radio frames (12₁, 12₂), paging information onto the first, fifth, sixth, and tenth subframe (SF#0, SF#4, SF#5, SF#9) or only onto the tenth subframe (SF#9), while also correspondingly choosing downlink paging parameters, when a bandwidth of 5.0, 10.0, 15.0 or 20 MHz is used.

9. Method according to any one of the claims 4 to 8, wherein, for the uplink radio frames (13₁, 13₂), the physical random access channel, PRACH, is located only on the fifth and sixth subframes (SF#4, SF#5).

10. System (5) for redundant communication between a user terminal (4) and a central station (3), comprising
a first communication system (6) having a first transceiver (8) of the user terminal (4) and a first node (9),
a second communication system (7) having a second transceiver (10) of the user terminal (4) and a second node (11), the first and second transceiver (8, 10) being separate from each other and the first and second node (9, 11) being separate from each other,
wherein both communication systems (6, 7) are configured to operate according to an LTE standard such that each communication system (6, 7) communicates downlink data over a sequence of downlink radio frames (12₁, 12₂) and uplink data over a sequence of uplink radio frames (13₁, 13₂), the downlink as well as the uplink radio frames (12₁, 12₂, 13₁, 13₂) each comprising a predetermined number of subframes (SF#n),
**characterised in that** the communication systems (6, 7) are configured to be synchronised on a subframe level, **in that** both are configured to use identical frequency ranges (f_{i,d}) for the downlink radio frames (12₁, 12₂), respectively, and **in that** both are configured to use identical frequency ranges (f_{i,u}) for the uplink radio frames (13₁, 13₂), respectively,
wherein both communication systems (6, 7) are configured to have the first subframe (SF#0) of the first half of one of the downlink radio frames (12₁) of the first communication system (6) coincide with the first subframe (SF#5) of the second half of one of the downlink radio frames (12₂) of the second communication system (7),
wherein, for both downlink radio frames (12₁, 12₂) and uplink radio frames (13₁, 13₂) respectively, the first communication system (6) is configured to use a first set (S₁) of subframes (SF#n) for communication of traffic data and the second communication system (7) is configured to use a second set (S₂) of subframes (SF#n) for communication of traffic data, wherein the first and second set (S₁, S₂) of subframes (SF#n) do not overlap during communication, and
wherein the first and the second communication systems (6, 7) are configured to, in the case of a failure of the respective other communication system (6, 7), use the set (S₁, S₂) of subframes (SF#n) previously used by said other communication system (6, 7) for communication of traffic data, too.

11. System according to claim 10, wherein, in case of a failure of one of the communication systems (6, 7), the transceiver (8, 10) of said failing communication system is configured to join the operative communication system (6, 7) and to communicate traffic data with the node (9, 11) of the respective other communication system (6, 7).

12. System according to claim 10 or 11, wherein both communication systems (6, 7) have their own physical cell identifier, and are configured to transmit synchronisation signals (PSS, SSS), which encode said physical cell identifiers, over the first subframe (SF#0) of the first half and over the first subframe (SF#5) of the second half of each downlink radio frame (12₁, 12₂), and
wherein the relationship between the physical cell identifiers is (PCI₁ - PCI₂) mod 6 ≠ 0, wherein PCI₁ and PCI₂ are the physical cell identifiers of the first and of the second communication system, respectively, and mod is the modulo operation.

13. System according to any one of the claims 10 to 13, wherein both communication systems (6, 7) are configured to have the first subframe (SF#0) of the first half of one of the uplink radio frames (13₁) of the first communication system (6) coincide with the first subframe (SF#5) of the second half of one of the uplink radio frames (13₂) of the second communication system (7), and
wherein the downlink and uplink radio frames (12₁, 12₂, 13₁, 13₂) each comprise ten subframes (SF#0, ..., SF#9) such that the first subframe (SF#0) of the first communication system (6) coincides with the sixth subframe (SF#5) of the second communication system (7).

14. System according to claim 13, wherein both communication systems (6, 7) are configured to use their respective second, third, and fourth downlink and uplink subframes (SF#1, SF#2, SF#3) to communicate traffic data when both communication systems (6, 7) are in operation and are further configured to use the second, third, fourth, seventh, eight, and ninth downlink and uplink subframes (SF#1, SF#2, SF#3, SF#6, SF#7, SF#8) to communicate traffic data in case of a failure of the respective other communication system (6, 7).

15. System according to claim 13 or 14, wherein both communication systems (6, 7) are configured to schedule system information blocks, SIB, onto the sixth subframe (SF#5) of the downlink radio frames (12₁, 12₂).

## Patentansprüche

1. Verfahren zur redundanten Kommunikation zwischen einem Benutzerterminal (4) und einer zentralen Station (3), wobei das Verfahren ein erstes und ein zweites Kommunikationssystem (6, 7) verwendet, die jeweils einen Sendeempfänger (8, 10) des Benutzerterminals (4) aufweisen, welcher mit einem an die zentrale Station (3) angeschlossenen Knoten (9, 11) kommuniziert, wobei die beiden Sendeempfänger (8, 10) voneinander getrennt sind und die beiden Knoten (9, 11) voneinander getrennt sind,
wobei beide Kommunikationssysteme (6, 7) nach einem LTE-Standard betrieben werden, sodass jedes Kummunikationssystem (6, 7) Downlink-Daten über eine Folge von Downlink-Funkframes (12₁, 12₂) und Uplink-Daten über eine Folge von Uplink-Funkframes (13₁, 13₂) kommuniziert, wobei sowohl die Downlinkals auch die Uplink-Funkframes (12₁, 12₂, 13₁, 13₂) jeweils eine vorbestimmte Anzahl an Subframes (SF#n) aufweisen,
**dadurch gekennzeichnet, dass** die Kommunikationssysteme (6, 7) auf Subframeebene synchronisiert sind, beide jeweils gleiche Frequenzbereiche (f_{i,d}) für die Downlink-Funkframes und jeweils gleiche Frequenzbereiche (f_{i,u}) für die Uplink-Funkframes verwenden,
wobei der erste Subframe (SF#0) der ersten Hälfte eines der Downlink-Funkframes (12₁) des ersten Kommunikationssystems (6) mit dem ersten Subframe (SF#5) der zweiten Hälfte eines der Downlink-Funkframes (12₂) des zweiten Kommunikationssystems (7) zusammenfällt,
wobei sowohl für Downlink-Funkframes (12₁, 12₂) als auch für Uplink-Funkframes (13₁, 13₂) jeweils das erste Kommunikationssystem (6) eine erste Menge (S₁) von Subframes (SF#n) zur Kommunikation von Verkehrsdaten und das zweite Kommunikationssystem (7) eine zweite Menge (S₂) von Subframes (SF#n) zur Kommunikation von Verkehrsdaten verwendet, wobei die erste und zweite Menge von Subframes (S₁, S₂) sich während der Kommunikation nicht überschneiden, und
wobei bei einem Ausfall eines der Kommunikationssysteme (6, 7) das jeweils andere Kommunikationssystem (6, 7) auch die Menge (S₁, S₂) von Subframes (SF#n), die von dem genannten anderen Kommunikationssystem (6, 7) zuvor nicht verwendet wurde, zur Kommunikation von Verkehrsdaten verwendet.

2. Verfahren nach Anspruch 1, wobei bei einem Ausfall eines der Kommunikationssysteme (6, 7) der Sendeempfänger (8, 10) des genannten ausfallenden Kommunikationssystems (6, 7) sich dem betriebsfähigen Kommunikationssystem (6, 7) anschließt und Verkehrsdaten mit dem Knoten (9, 11) des jeweils anderen Kommunikationssystems (6, 7) kommuniziert.

3. Verfahren nach Anspruch 1 oder 2, wobei beide Kommunikationssysteme ihre eigene physikalische Zellkennung haben, die in Synchronisationssignalen kodiert ist, welche über den ersten Subframe (SF#0) der ersten Hälfte und über den ersten Subframe (SF#5) der zweiten Hälfte jedes Downlink-Funkframes (12₁, 12₂) gesendet werden, und
wobei die Beziehung zwischen den physikalischen Zellkennungen (PCI₁ - PCI₂) mod 6 ≠ 0 ist, wobei PCI₁ und PCI₂ die physikalischen Zellkennungen des ersten bzw. des zweiten Kommunikationssystems sind und mod die Modulo-Operation ist.

4. Verfahren nach einem der Ansprüche 1 bis 3, wobei der erste Subframe (SF#0) der ersten Hälfte eines der Uplink-Funkframes (13₁) des ersten Kommunikationssystems (6) mit dem ersten Subframe (SF#5) der zweiten Hälfte eines der Uplink-Funkframes (13₂) des zweiten Kommunikationssystems (7) zusammenfällt, und
wobei die Downlink- und Uplink-Funkframes (12₁, 12₂, 13₁, 13₂) jeweils zehn Subframes (SF#0, ..., SF#9) aufweisen, sodass der erste Subframe (SF#0) des ersten Kommunikationssystems (6) mit dem sechsten Subframe (SF#5) des zweiten Kommunikationssystems (7) zusammenfällt.

5. Verfahren nach Anspruch 4, wobei beide Kommunikationssysteme ihre jeweiligen zweiten, dritten und vierten Downlink- und Uplink-Subframes (SF#1, SF#2, SF#3) verwenden, um Verkehrsdaten zu kommunizieren, wenn beide Kommunikationssysteme (6, 7) in Betrieb sind, wogegen ein Kommunikationssystem (6, 7) die zweiten, dritten, vierten, siebten, achten und neunten Downlink- und Uplink-Subframes (SF#1, SF#2, SF#3, SF#6, SF#7, SF#8) verwendet, um Verkehrsdaten bei einem Ausfall des jeweils anderen Kommunikationssystems (6, 7) zu kommunizieren.

6. Verfahren nach Anspruch 4 oder 5, wobei beide Kommunikationssysteme (6, 7) für die Downlink-Funkframes (12₁, 12₂) Systeminformationsblöcke, SIB, auf dem sechsten Subframe (SF#5) der Downlink-Funkframes (12₁, 12₂) einteilen.

7. Verfahren nach einem der Ansprüche 4 bis 6, wobei beide Kommunikationssysteme (6, 7) für die Downlink-Funkframes (12₁, 12₂) Paging-Information auf dem sechsten Subframe (SF#5) einteilen, wenn eine Bandbreite von 1,4 oder 3,0 MHz verwendet wird.

8. Verfahren nach einer der Ansprüche 4 bis 6, wobei beide Kommunikationssysteme (6, 7) für die Downlink-Funkframes (12₁, 12₂) Paging-Information auf dem ersten, fünften, sechsten und zehnten Subframe (SF#0, SF#4, SF#5, SF#9) oder nur auf dem zehnten Subframe (SF#9) einteilen, während sie gleichzeitig Downlink-Pagingparameter entsprechend wählen, wenn eine Bandbreite von 5,0, 10,0, 15,0 oder 20 MHz verwendet wird.

9. Verfahren nach einem der Ansprüche 4 bis 8, wobei sich für die Uplink-Funkframes (13₁, 13₂) der physikalische Direktzugriffskanal, PRACH, nur auf den fünften und sechsten Subframes (SF#4, SF#5) befindet.

10. System (5) zur redundanten Kommunikation zwischen einem Benutzerterminal (4) und einer zentralen Station (3), umfassend
ein erstes Kommunikationssystem (6), welches einen ersten Sendeempfänger (8) des Benutzerterminals (4) und einen ersten Knoten (9) hat,
ein zweites Kommunikationssystem (7), welches einen zweiten Sendeempfänger (10) des Benutzerterminals (4) und einen zweiten Knoten (11) hat, wobei der erste und der zweite Sendeempfänger (8, 10) voneinander getrennt sind und der erste und der zweite Knoten (9, 11) voneinander getrennt sind,
wobei beide Kommunikationssysteme (6, 7) dafür ausgelegt sind, nach einem LTE-Standard zu arbeiten, sodass jedes Kommunikationssystem (6, 7) Downlink-Daten über eine Folge von Downlink-Funkframes (12₁, 12₂) und Uplink-Daten über eine Folge von Uplink-Funkframes (13₁, 13₂) kommuniziert, wobei sowohl die Downlink- als auch die Uplink-Funkframes (12₁, 12₂, 13₁, 13₂) jeweils eine vorbestimmte Anzahl an Subframes (SF#n) aufweisen,
**dadurch gekennzeichnet, dass** die Kommunikationssysteme (6, 7) auf Subframeebene synchronisiert sind, dass beide dafür ausgelegt sind, jeweils gleiche Frequenzbereiche (f_{i,d}) für die Downlink-Funkframes (12₁, 12₂) zu verwenden, und dass beide dafür ausgelegt sind, jeweils gleiche Frequenzbereiche (f_{i,u}) für die Uplink-Funkframes (13₁, 13₂) zu verwenden,
wobei beide Kommunikationssysteme (6, 7) dafür ausgelegt sind, dass der erste Subframe (SF#0) der ersten Hälfte eines der Downlink-Funkframes (12₁) des ersten Kommunikationssystems (6) mit dem ersten Subframe (SF#5) der zweiten Hälfte eines der Downlink-Funkframes (12₂) des zweiten Kommunikationssystems (7) zusammenfällt,
wobei sowohl für Downlink-Funkframes (12₁, 12₂) als auch für Uplink-Funkframes (13₁, 13₂) jeweils das erste Kommunikationssystem (6) dafür ausgelegt ist, eine erste Menge (S₁) von Subframes (SF#n) zur Kommunikation von Verkehrsdaten zu verwenden, und das zweite Kommunikationssystem (7) dafür ausgelegt ist, eine zweite Menge (S₂) von Subframes (SF#n) zur Kommunikation von Verkehrsdaten zu verwenden, wobei die erste und zweite Menge von Subframes (S₁, S₂) sich während der Kommunikation nicht überschneiden, und
wobei das erste und das zweite Kommunikationssystem (6,7) dafür ausgelegt sind, bei einem Ausfall des jeweils anderen Kommunikationssystems (6, 7) auch die Menge (S₁, S₂) von Subframes (SF#n), die vom genannten anderen Kommunikationssystem (6, 7) zuvor nicht verwendet wurde, zur Kommunikation von Verkehrsdaten zu verwenden.

11. System nach Anspruch 10, wobei bei einem Ausfall eines der Kommunikationssysteme (6, 7) der Sendeempfänger (8, 10) des genannten ausfallenden Kommunikationssystems (6, 7) dafür ausgelegt ist, sich dem betriebsfähigen Kommunikationssystem (6, 7) anzuschließen und Verkehrsdaten mit dem Knoten (9, 11) des jeweils anderen Kommunikationssystems (6, 7) zu kommunizieren.

12. System nach Anspruch 10 oder 11, wobei beide Kommunikationssysteme (6, 7) ihre eigene physikalische Zellkennung haben und dafür ausgelegt sind, Synchronisationssignale (PSS, SSS), welche die genannten physikalischen Zellkennungen kodieren, über den ersten Subframe (SF#0) der ersten Hälfte und über den ersten Subframe (SF#5) der zweiten Hälfte jedes Downlink-Funkframes (12₁, 12₂) zu senden, und
wobei die Beziehung zwischen den physikalischen Zellkennungen (PCI₁ - PCI₂) mod 6 ≠ 0 ist, wobei PCI₁ und PCI₂ die physikalischen Zellkennungen jeweils des ersten und des zweiten Kommunikationssystems sind und mod die Modulo-Operation ist.

13. System nach einem der Ansprüche 10 bis 13, wobei beide Kommunikationssysteme (6, 7) dafür ausgelegt sind, dass der erste Subframe (SF#0) der ersten Hälfte eines der Uplink-Funkframes (13₁) des ersten Kommunikationssystems (6) mit dem ersten Subframe (SF#5) der zweiten Hälfte eines der Uplink-Funkframes (13₂) des zweiten Kommunikationssystems (7) zusammenfällt, und
wobei die Downlink- und Uplink-Funkframes (12₁, 12₂, 13₁, 13₂) jeweils zehn Subframes (SF#0, ..., SF#9) aufweisen, sodass der erste Subframe (SF#0) des ersten Kommunikationssystems (6) mit dem sechsten Subframe (SF#5) des zweiten Kommunikationssystems (7) zusammenfällt.

14. System nach Anspruch 13, wobei beide Kommunikationssysteme (6, 7) dafür ausgelegt sind, ihre jeweiligen zweiten, dritten und vierten Downlink- und Uplink-Subframes (SF#1, SF#2, SF#3) zu verwenden, um Verkehrsdaten zu kommunizieren, wenn beide Kommunikationssysteme (6, 7) in Betrieb sind, und weiters dafür ausgelegt sind, die zweiten, dritten, vierten, siebten, achten und neunten Downlink- und Uplink-Subframes (SF#1, SF#2, SF#3, SF#6, SF#7, SF#8) zu verwenden, um Verkehrsdaten bei einem Ausfall des jeweils anderen Kommunikationssystems (6, 7) zu kommunizieren.

15. System nach Anspruch 13 oder 14, wobei beide Kommunikationssysteme (6, 7) dafür ausgelegt sind, Systeminformationsblöcke, SIB, auf dem sechsten Subframe (SF#5) der Downlink-Funkframes (12₁, 12₂) einzuteilen.

## Revendications

1. Procédé de communication redondante entre un terminal d'utilisateur (4) et une station centrale (3), le procédé utilisant un premier et un second système de communication (6, 7), chacun comprenant un émetteur-récepteur (8, 10) du terminal d'utilisateur (4) communiquant avec un nœud (9, 11) connecté à la station centrale (3), les deux émetteurs-récepteurs (8, 10) étant séparés l'un de l'autre et les deux nœuds (9, 10) étant séparés l'un de l'autre,
dans lequel les deux systèmes de communication (6, 7) fonctionnement selon une norme LTE de sorte que chaque système de communication (6, 7) communique des données en liaison descendante sur une séquence de trames radio en liaison descendante (12₁, 12₂) et des données en liaison ascendante sur une séquence de trames radio en liaison ascendante (13₁, 13₂), les trames radio en liaison descendante ainsi qu'en liaison ascendante (12₁, 12₂, 13₁, 13₂) comprenant chacune un nombre prédéterminé de sous-trames (SF#n),
**caractérisé en ce que** les systèmes de communication (6, 7) sont synchronisés sur un niveau sous-trame, les deux utilisent des gammes de fréquences (f_{i,d}) identiques pour les trames radio en liaison descendante, respectivement, et les deux utilisent des gammes de fréquences (f_{i,u}) identiques pour les trames radio en liaison ascendante, respectivement,
dans lequel la première sous-trame (SF#0) de la première moitié de l'une des trames radio en liaison descendante (12₁) du premier système de communication (6) coïncide avec la première sous-trame (SF#5) de la seconde moitié de l'une des trames radio en liaison descendante (12₂) du second système de communication (7),
dans lequel, pour les deux trames radio en liaison descendante (12₁, 12₂) et les trames radio en liaison ascendante (13₁, 13₂), respectivement, le premier système de communication (6) utilise un premier ensemble (S₁) de sous-trames (SF#n) pour une communication de données de trafic et le second système de communication (7) utilise un second ensemble (S₂) de sous-trames (SF#n) pour la communication de données de trafic, où le premier et le second ensemble de sous-trames (S₁, S₂) ne se superposent pas durant la communication, et
dans lequel, dans le cas d'une défaillance de l'un des systèmes de communication (6, 7), l'autre système de communication (6, 7) respectif utilise également l'ensemble (S₁, S₂) de sous-trames (SF#n) précédemment non utilisé par ledit autre système de communication (6, 7) pour la communication de données de trafic.

2. Procédé selon la revendication 1, dans lequel, dans le cas d'une défaillance de l'un des systèmes de communication (6, 7), l'émetteur-récepteur (8, 10) dudit système de communication (6, 7) en défaillance se joint au système de communication (6, 7) opérationnel et communique des données de trafic avec le nœud (9, 11) de l'autre système de communication (6, 7) respectif.

3. Procédé selon la revendication 1 ou 2, dans lequel les deux systèmes de communication ont leur propre identifieur de cellule physique qui est encodé en signaux de synchronisation transmis sur la première sous-trame (SF#0) de la première moitié et sur la première sous-trame (SF#0) de la seconde moitié de chaque trame radio en liaison descendante (12₁, 12₂), et
dans lequel la relation entre les identifieurs de cellule physique est (PCI₁ - PCI₂) mod 6 ≠ 0, où PCI₁ et PCI₂ sont les identifieurs de cellule physique des premier et second systèmes de communication respectivement, et mod est l'opération modulo.

4. Procédé selon l'une quelconque des revendications 1 à 3, dans lequel la première sous-trame (SF#0) de la première moitié de l'une des trames radio en liaison ascendante (13₁) du premier système de communication (6) coïncide avec la première sous-trame (SF#5) de la seconde moitié de l'une des trames radio en liaison ascendante (13₂) du second système de communication (7), et
dans lequel les trames radio en liaison descendante et en liaison ascendante (12₁, 12₂, 13₁, 13₂) comprennent chacune dix sous-trames (SF#0, ..., SF#9) de sorte que la première sous-trame (SF#0) du premier système de communication (6) coïncide avec la sixième sous-trame (SF#5) du second système de communication (7) .

5. Procédé selon la revendication 4, dans lequel les deux systèmes de communication utilisent leurs deuxième, troisième et quatrième sous-trames en liaison descendante et en liaison ascendante (SF#1, SF#2, SF#3) respectives pour communiquer des données de trafic lorsque les deux systèmes de communication (6, 7) sont opérationnels, tandis qu'un système de communication (6, 7) utilise les deuxième, troisième, quatrième, septième, huitième et neuvième sous-trames en liaison descendante et en liaison ascendante (SF#1, SF#2, SF#3, SF#6, SF#7, SF#8) pour communiquer des données de trafic dans le cas d'une défaillance de l'autre système de communication (6, 7) respectif.

6. Procédé selon la revendication 4 ou 5, dans lequel les deux systèmes de communication (6, 7) prévoient, pour les trames radio en liaison descendante (12₁, 12₂), des blocs d'informations système, SIB, sur la sixième sous-trame (SF#5) des trames radio en liaison descendante (12₁, 12₂).

7. Procédé selon l'une quelconque des revendications 4 à 6, dans lequel les deux systèmes de communication (6, 7) prévoient, pour les trames radio en liaison descendante (12₁, 12₂), une information de radiomessagerie sur la sixième sous-trame (SF#5) lorsqu'une largeur de bande de 1,4 ou 3,0 MHz est utilisée.

8. Procédé selon l'une quelconque des revendications 4 à 6, dans lequel les deux systèmes de communication (6, 7) prévoient, pour les trames radio en liaison descendante (12₁, 12₂), une information de radiomessagerie sur le première, cinquième, sixième et dixième sous-trame (SF#0, SF#4, SF#5, SF#9) ou uniquement sur la dixième sous-trame (SF#9), tout en choisissant de manière correspondante des paramètres de radiomessagerie en liaison descendante lorsqu'une largeur de bande de 5,0, 10,0, 15,0 ou 20 MHz est utilisée.

9. Procédé selon l'une quelconque des revendications 4 à 8, dans lequel, pour les trames radio en liaison ascendante (13₁, 13₂), le canal d'accès aléatoire physique, PRACH, est situé uniquement sur les cinquième et sixième sous-trames (SF#4, SF#5).

10. Système (5) de communication redondante entre un terminal d'utilisateur (4) et une station centrale (3), comprenant
un premier système de communication (6) ayant un premier émetteur-récepteur (8) du terminal d'utilisateur (4) et un premier nœud (9),
un second système de communication (7) ayant un second émetteur-récepteur (10) du terminal d'utilisateur (4) et un second nœud (11), les premier et second émetteurs-récepteurs (8, 10) étant séparés l'un de l'autre et les premier et second nœuds (9, 11) étant séparés l'un de l'autre,
dans lequel les deux systèmes de communication (6, 7) sont conçus pour un fonctionnement selon une norme LTE de sorte que chaque système de communication (6, 7) communique des données en liaison descendante sur une séquence de trames radio en liaison descendante (12₁, 12₂) et des données en liaison ascendante sur une séquence de trames radio en liaison ascendante (13₁, 13₂), les trames radio en liaison descendante ainsi qu'en liaison ascendante (12₁, 12₂, 13₁, 13₂) comprenant chacune un nombre prédéterminé de sous-trames (SF#n),
**caractérisé en ce que** les systèmes de communication (6, 7) sont conçus pour être synchronisés sur un niveau sous-trame, **en ce que** les deux utilisent des gammes de fréquences (f_{i,d}) identiques pour les trames radio en liaison descendante (12₁, 12₂), respectivement, et **en ce que** les deux sont configurées pour utiliser des gammes de fréquences (f_{i,u}) identiques pour les trames radio en liaison ascendante (13₁, 13₂), respectivement,
dans lequel les deux systèmes de communication (6, 7) sont conçus pour avoir la première sous-trame (SF#0) de la première moitié de l'une des trames radio en liaison descendante (12₁) du premier système de communication (6) coïncidant avec la première sous-trame (SF#5) de la seconde moitié de l'une des trames radio en liaison descendante (12₂) du second système de communication (7),
dans lequel, pour les deux trames radio en liaison descendante (12₁, 12₂) et les trames radio en liaison ascendante (13₁, 13₂), respectivement, le premier système de communication (6) est conçu pour utiliser un premier ensemble (S₁) de sous-trames (SF#n) pour une communication de données de trafic et le second système de communication (7) est conçu pour utiliser un second ensemble (S₂) de sous-trames (SF#n) pour la communication de données de trafic, où le premier et le second ensemble (S₁, S₂) de sous-trames (S₁, S₂) ne se superposent pas durant la communication, et
dans lequel les premier et second systèmes de communication (6, 7) sont conçus pour, dans le cas d'une défaillance de l'autre système de communication (6, 7) respectif, utiliser également l'ensemble (S₁, S₂) de sous-trames (SF#n) précédemment utilisé par ledit autre système de communication (6, 7) pour la communication de données de trafic.

11. Système selon la revendication 10, dans lequel, dans le cas d'une défaillance de l'un des systèmes de communication (6, 7), l'émetteur-récepteur (8, 10) dudit système de communication en défaillance est conçu pour se joindre au système de communication (6, 7) opérationnel, et pour communiquer des données de trafic avec le nœud (8, 11) de l'autre système de communication (6, 7) respectif.

12. Système selon la revendication 10 ou 11, dans lequel les deux systèmes de communication (6, 7) ont leur propre identifieur de cellule physique, et sont configurés pour transmettre des signaux de synchronisation (PSS, SSS) qui encodent lesdits identifieurs de cellule physique sur la première sous-trame (SF#0) de la première moitié et sur la première sous-trame (SF#5) de la seconde moitié de chaque trame radio en liaison descendante (12₁, 12₂), et
dans lequel la relation entre les identifieurs de cellule physique est (PCI₁ - PCI₂) mod 6 ≠ 0, où PCI₁ et PCI₂ sont les identifieurs de cellule physique des premier et second systèmes de communication respectivement, et mod est l'opération modulo.

13. Système selon l'une quelconque des revendications 10 à 13, dans lequel les deux systèmes de communication (6, 7) sont conçus pour avoir la première sous-trame (SF#0) de la première moitié de l'une des trames radio en liaison ascendante (13₁) du premier système de communication (6) coïncidant avec la première sous-trame (SF#5) de la seconde moitié de l'une des trames radio en liaison ascendante (13₂) du second système de communication (7), et
dans lequel les trames radio en liaison descendante et en liaison ascendante (12₁, 12₂, 13₁, 13₂) comprennent chacune dix sous-trames (SF#0, ..., SF#9), de sorte que la première sous-trame (SF#0) du premièr système de communication (6) coïncide avec la sixième sous-trame (SF#5) du second système de communication (7).

14. Système selon la revendication 13, dans lequel les deux systèmes de communication (6, 7) sont conçus pour utiliser leurs deuxième, troisième et quatrième sous-trames en liaison descendante et en liaison ascendante (SF#1, SF#2, SF#3) respectives pour communiquer des données de trafic lorsque les deux systèmes de communication (6, 7) sont opérationnels et sont en outre conçus pour utiliser les deuxième, troisième, quatrième, septième, huitième et neuvième sous-trames en liaison descendante et en liaison ascendante (SF#1, SF#2, SF#3, SF#6, SF#7, SF#8) pour communiquer des données de trafic dans le cas d'une défaillance de l'autre système de communication (6, 7) respectif.

15. Système selon la revendication 13 ou 14, dans lequel les deux systèmes de communication (6, 7) sont conçus pour prévoir des blocs d'information système, SIB, sur la sixième sous-trame (SF#5) des trames radio en liaison descendantes (12₁, 12₂) .
